# FASCICULE DE BREVET EUROPEEN

(11) **EP 2 825 410 B1**
(45) Date de publication et mention de la délivrance du brevet: **30.03.2016**
(21) Numéro de dépôt: 13701666.3
(22) Date de dépôt: 31.01.2013
(51) Int. Cl.: B60K 37/04, B60R 11/02, B60R 11/00

(54) **DISPOSITIF DE MONTAGE D'UN BOÎTIER, NOTAMMENT D'UNE RADIO, DANS UN COMPARTIMENT DE PLANCHE DE BORD D'UN VÉHICULE AUTOMOBILE**
VORRICHTUNG ZUR MONTAGE EINER EINHEIT, INSBESONDERE EINES RADIOS, IN EINEM ARMATURENBRETTFACH EINES KRAFTFAHRZEUGS
DEVICE FOR MOUNTING A UNIT, NOTABLY A RADIO, IN A MOTOR VEHICLE INSTRUMENT PANEL COMPARTMENT

(30) Priorité: 14.03.2012 FR 1252294
(43) Date de publication de la demande: 21.01.2015
(73) Titulaire: Renault S.A.S., 92100 Boulogne-Billancourt (FR)
(72) Inventeur: PERVEYRIE, Sylvie, F-78280 Guyancourt (FR); BOUGAULT, Michel, F-78380 Bougival (FR); DAGOREAU, Alain, F-92250 La Garenne-Colombes (FR); PERRIN, Laurent, F-78000 Versailles (FR); PRIN, Isabelle, F-91400 Orsay (FR)
(86) Numéro de dépôt international: PCT/EP2013/051919
(87) Numéro de publication internationale: WO 2013/135421

(56) Documents cités:
- DE-A1- 3 225 466
- JP-U- 58 144 886
- US-A- 5 560 572
- US-A1- 2004 145 208

## Description

La présente invention concerne un dispositif de montage d'un boîtier, notamment d'une radio, dans un compartiment de planche de bord d'un véhicule automobile.

Le montage d'un boîtier de radio dans le compartiment prévu à cet effet dans la planche de bord d'un véhicule doit permettre de fixer correctement le poste dans toutes les directions. La cote verticale peut par exemple être donnée par la combinaison d'un pion placé à l'arrière du boîtier de radio avec des pions latéraux de rattrapage de jeu ; le pion arrière, central, pénètre dans un orifice correspondant situé au fond et au milieu du compartiment. Cependant, l'augmentation du nombre des connecteurs à l'arrière du boîtier, lié à l'augmentation des fonctions sur la radio, rend souhaitable de ne pas avoir à utiliser de pion arrière de centrage et d'assurer la cote verticale par d'autres moyens.

Le document US 5560572 comprend toutes les caractéristiques du préambule de la revendication 1 et fait connaître un dispositif de montage d'un boîtier présentant deux faces latérales parallèles sur chacune desquelles est disposé un organe mâle ou tenon, le dispositif comportant deux glissières latérales parallèles superposées formées dans des parois d'une cuvette de logement s'étendant à partir d'un cadre de façade bordant l'ouverture d'un compartiment de la planche de bord d'un véhicule ; les glissières forment un organe femelle ou mortaise orientée dans une direction sensiblement longitudinale et ayant une zone d'entrée et une zone de fond moins haute que la zone d'entrée ; le tenon comporte une partie élastiquement compressible destinée à pousser verticalement le tenon dans la mortaise lors de l'introduction du tenon dans la zone de fond étroite (basse) de sa mortaise correspondante. La construction de la mortaise en deux parties séparées et du tenon en deux parties également est relativement compliquée.

Selon une solution observée sur des véhicules de la marque Mercedes ®, il existe un dispositif de montage avec un seul tenon sur chaque face du boîtier, réalisé sous forme d'une pièce mâle ovale comportant une anse élastiquement écrasable formée par un évidement parallèle au bord supérieur de la pièce, et une seule mortaise convergente de chaque côté du compartiment : quand on engage chacun des tenons élastiques dans sa mortaise correspondante, la partie élastique se déforme, s'écrase élastiquement, et assure un placage en Z de la radio, ce qui permet nonmalement d'absorber les dispersions géométriques de la planche de bord.

Dans l'un et l'autre des deux dispositifs ci-dessus, les glissières latérales coopérant avec les tenons latéraux sont formées d'un seul tenant et intégralement dans une paroi attenante à un cadre de montage en façade. On a constaté qu'il pouvait parfois en résulter des difficultés de montage de la radio dans le compartiment en raison des dispersions de fabrication lors du moulage des éléments.

Le but de l'invention est d'offrir une solution alternative de glissières de montage qui facilite la fabrication et le montage du dispositif.

L'invention atteint son but grâce à un dispositif de montage d'un boîtier dans un compartiment d'une planche de bord de véhicule comportant une ouverture d'insertion de boîtier, le boîtier présentant deux faces latérales parallèles sur chacune desquelles est disposé un tenon, le dispositif comportant deux glissières latérales parallèles fixes formant pour les tenons un chemin guidé dans une direction sensiblement longitudinale et ayant une zone d'entrée et une zone de fond moins haute que la zone d'entrée, chaque tenon comportant une partie élastiquement compressible destinée à pousser verticalement le tenon dans la glissière lorsque le tenon est dans la zone de fond de sa glissière correspondante, un cadre de façade étant prévu autour de l'ouverture d'insertion de boîtier pour coopérer au positionnement et/ou à la fixation d'une plaque de façade du boîtier, caractérisé en ce que les glissières latérales comprennent deux parties longitudinalement séparées, à savoir une première partie solidaire dudit cadre de façade et une seconde partie non solidaire du cadre de façade et maintenue sur une paroi du compartiment de planche de bord de manière à être sensiblement dans le prolongement longitudinal de la première partie.

Grâce à cette disposition, on peut fabriquer plus facilement, notamment par moulage d'une matière plastique, le cadre de façade et la première partie de glissière, laquelle est avantageusement assez courte. La seconde partie est fabriquée séparément et est fixée indépendamment du cadre de façade.

Le dispositif de l'invention présente avantageusement l'une ou l'autre des caractéristiques suivantes, seules ou en combinaison.
- la première partie de glissière comporte un fond et deux bordures convergentes.
- la seconde partie de glissière comporte une lumière formée par un rail supérieur et un rail inférieur convergents par paliers.
- la seconde partie de glissière comporte une première section à convergence rapide de raccordement à l'extrémité arrière de la première parte de glissière.
- la seconde partie de glissière comporte la zone de fond de hauteur inférieure à la hauteur libre d'un tenon.
- la seconde partie de glissière comporte comprend au voisinage de la zone de fond une paroi latérale.
- le tenon est constitué d'une partie centrale de laquelle partent deux bras symétriques opposés portant chacun deux pattes formant des ancres longitudinales symétriques par rapport à la partie centrale et élastiquement compressibles en hauteur.
- le tenon comprend un corps principal de section longitudinale ovale surmonté de deux ailettes élastiques partant des extrémités du corps et dirigées le long de celui-ci, parallèlement à lui, vers son centre.
- la plaque de montage du boîtier comporte des reliefs coopérant avec des reliefs complémentaires prévus dans la façade de montage entourant l'ouverture d'insertion.
- la plaque de montage du boîtier comporte des orifices de fixation coopérant avec des orifices de fixation prévus dans la façade de montage entourant l'ouverture d'insertion.

D'autres caractéristiques et avantages de l'invention ressortiront de la description suivante d'un exemple de réalisation. Il sera fait référence aux dessins annexés sur lesquels :
La figure 1 est une vue schématique en perspective de trois-quarts arrière d'un poste de radio dont les faces latérales sont dotées des tenons élastiques conformes à l'invention.
La figure 2 est une vue partielle en perspective de trois-quarts avant du boîtier de radio et d'une des deux glissières latérales du dispositif conforme à l'invention, lors d'une première étape de l'engagement du boîtier de radio dans le compartiment.
La figure 3 est une vue partielle en perspective de trois-quarts avant du boîtier de radio et d'une des deux glissières latérales du dispositif conforme à l'invention, lors d'une seconde étape de l'engagement du boîtier de radio dans le compartiment.
La figure 4 est une vue latérale partielle du tenon élastique dans la glissière latérale lors d'une dernière étape de l'engagement du boîtier de radio dans le compartiment.
La figure 5 est une vue partielle en perspective d'une variante de cadre façade selon l'invention et des deux glissières latérales conformes à l'invention.
La figure 6 est vue partielle en perspective d'une variante de tenon élastique.

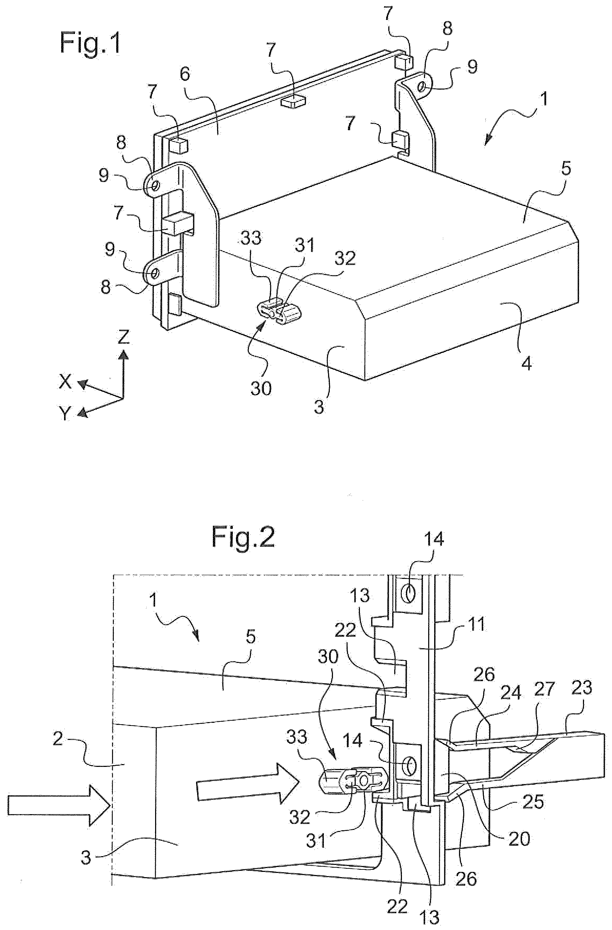

Comme représenté sur les figures 1 à 4, le boîtier de radio 1 a une forme sensiblement parallélépipédique, avec une paroi avant verticale 2, deux parois latérales verticales 3, une paroi arrière verticale 4, un dessus 5 et un fond. On notera qu'on parle ici d'avant et d'arrière du boîtier de radio tel que vu par un conducteur qui a le boîtier de radio devant lui lorsqu'il est dans le véhicule ; dans un repère traditionnel X, Y, Z des directions longitudinale, transversale, et verticale, l'arrière du boîtier 1 est en fait vers l'avant du véhicule.

Une façade avant 6 est montée sur la paroi avant 2 du boîtier 1 (elle n'a été représentée que sur la figure 1). Cette façade comprend une plaque à l'arrière de laquelle sont prévus d'une part des reliefs 7 de positionnement et des pattes 8 de fixation pourvues de trous 9 de fixation.

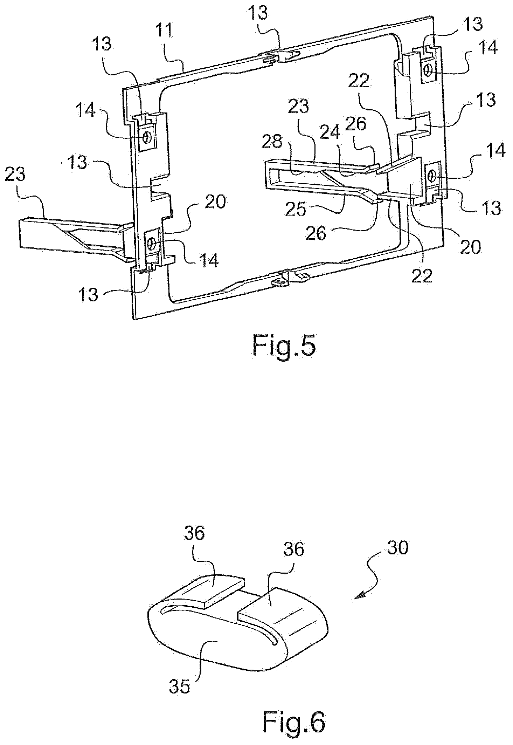

Les deux faces latérales 3 comprennent un tenon 30 protubérant, élastiquement compressible en hauteur. Dans cet exemple de réalisation, il comporte un manchon central 31 dont partent latéralement deux ancres formées par deux bras horizontaux longitudinaux 32 diamétralement opposés et qui se terminent chacun par deux pattes retournées élastiques 33 sensiblement parallèles aux bras 32. Le tenon peut être réalisé sous une forme différente, par exemple sous la forme représenté en figure 6, qui comprend un corps principal 35 de section longitudinale ovale surmonté de deux ailettes élastiques 36 partant des extrémités du corps et dirigées le long de celui-ci, parallèlement à lui, vers son centre. Dans ces deux modes de réalisation, le tenon 30 est susceptible d'être écrasé légèrement en hauteur et il exerce en réaction une force de résistance verticale.

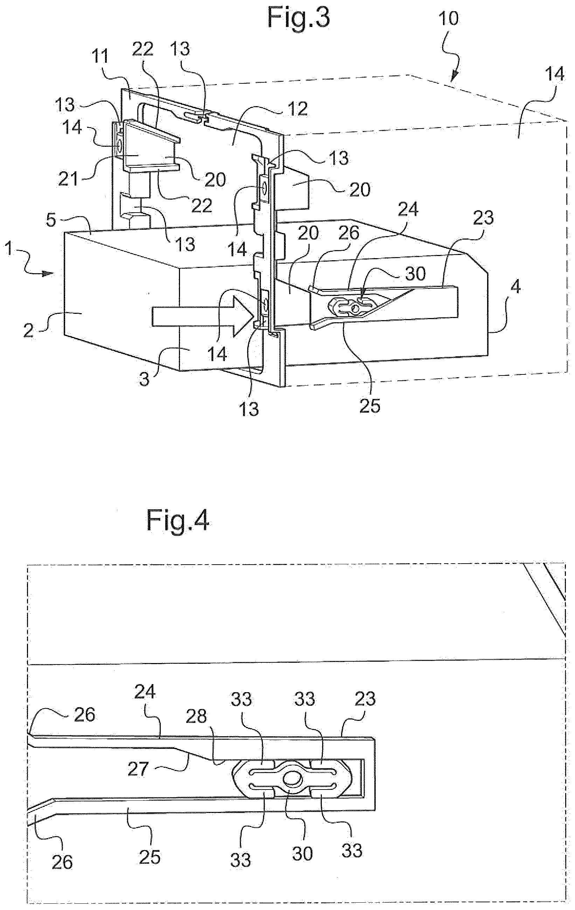

Le boîtier 1 est destiné à se loger dans un compartiment 10 seulement esquissé sur la figure 3 et formé dans la planche de bord d'un véhicule. Le compartiment 10 est généralement d'une taille standardisée désignée par 1DIN pour un volume simple et 2DIN pour un volume double (comme représenté ici, le boîtier 1 n'en occupant que la moitié). Le compartiment 10 comporte un cadre de façade 11 destiné à venir s'emboîter ou se fixer dans l'ouverture avant 12 du compartiment 10. Sur ce cadre 11, la plaque 6 de façade du boîtier est destinée à s'appliquer et à se positionner et se fixer grâce aux reliefs 7 et aux pattes de fixation 8. À cet effet, le cadre 11 comporte des évidements ou creux 13 complémentaires des reliefs 8 à recevoir et des trous 14 coopérant avec les trous 9 des pattes de fixation pour permettre le vissage de vis de fixation.

Conformément à l'invention, le cadre 11 comprend au moins deux premières parties de glissière latérale, ou avaloirs d'entrée 20, disposés longitudinalement vers l'arrière et définissant une piste de guidage avantageusement courte et rapidement convergente pour les tenons 30 du boîtier. Chaque avaloir 20 est formé d'un fond 21 et de deux bordures convergentes 22. Sur la figure 3, le cadre 11 comporte 4 avaloirs 20, les deux du bas servant au guidage du boîtier 1 représenté, et les deux du haut pouvant servir au guidage d'un second boîtier superposé au premier. Au contraire le cadre 11 de la figure 5 n'a été prévu qu'avec deux avaloirs 20.

La seconde partie 23 de glissière latérale est séparée de la première partie 20, mais est disposée longitudinalement à sa suite et est fixée par des moyens non représentés sur les parois latérales 14 du compartiment 10.La seconde partie de glissière 23 est d'une ou plusieurs pièces et comporte essentiellement une lumière de guidage globalement horizontale formée entre un profil ou rail supérieur 24 et un profil ou rail inférieur 25. La lumière de guidage est ouverte latéralement du côté intérieur du compartiment 10 mais est fermée du côté extérieur, au moins dans la région d'extrémité de la partie de glissière 23. La hauteur de la lumière va en décroissant, par exemple par paliers, depuis son extrémité d'entrée jusqu'à son extrémité la plus éloignée. Les rails 24,25 comportent en effet une première section courte à convergence rapide 26 dans laquelle peut venir s'emboîter l'extrémité arrière des avaloirs 20, afin d'assurer la continuité du guidage. Cette section 26 est suivie d'une première section de hauteur sensiblement constante ou faiblement convergente, formant zone d'entrée et de guidage du tenon, elle-même suivie d'une nouvelle section courte à convergence rapide 27 (seul le rail supérieur 24 participe ici à la réduction de hauteur de la lumière, le rail inférieur 25 restant horizontal une fois la section d'entrée passée), enfin suivie d'une nouvelle section 28 de hauteur sensiblement constante ou faiblement convergente, formant la zone de fond et de compression du tenon 30.

Les figures 2 à 4 illustrent trois étapes de l'introduction du boîtier 1 dans le logement 10 et de la coopération des tenons 30 dans les glissières horizontales 20, 23.

Dans la figure 2, le boîtier 1 est partiellement introduit dans le compartiment 10 et le tenon 30 est en phase d'approche de l'avaloir ou première partie de glissière 20.

Dans la figure 3, le boîtier 1 poursuivant son enfoncement, le tenon globalement horizontal 30 a commencé à s'introduire dans la seconde partie de glissière 23 globalement horizontale, dans sa première section de hauteur constante, cette hauteur étant plus grande que la hauteur libre du tenon 30.

Dans la figure 4, le tenon 30 a continué à glisser sur le rail inférieur 225 de la lumière 21, a passé la seconde section fortement convergente 27 et a accédé à la seconde section 28 de hauteur constante, laquelle est de hauteur légèrement inférieure à la hauteur libre du tenon 30. Par conséquent, lors du passage dans la section fortement convergente 27, les rails 24,25 qui se resserrent appuient sur les pattes élastiques 33 du tenon 30 et la hauteur des ancres a pu diminuer grâce à l'élasticité des pattes 33. Dans un exemple particulier, la hauteur des ancres peut diminuer de 0,5 mm de chaque côté, soit 1 mm en tout. Dans cette section 28, qui est la section de fond de la glissière 20, 23, le boîtier 1 est parfaitement maintenu en hauteur grâce au placage équilibré effectué par les pattes 33 des deux ancres formées sur le tenon 30.

Grâce à sa forme générale sensiblement horizontale avec à ses extrémités deux parties symétriques compressibles élastiquement (les ancres formées par les pattes 33), le guidage du tenon 30 dans sa glissière 20,23 est excellent et équilibré.

Pour assurer sa résistance et son élasticité, le tenon 30 est réalisé dans un matériau tel qu'une matière plastique, notamment un POM (polyoxyméthylène).

## Revendications

1. Dispositif de montage d'un boîtier (1) dans un compartiment (10) d'une planche de bord de véhicule comportant une ouverture (12) d'insertion de boîtier, le boîtier (1) présentant deux faces latérales parallèles (3) sur chacune desquelles est disposé un tenon (30), le dispositif comportant deux glissières latérales parallèles fixes (20, 23) formant pour les tenons (30) un chemin guidé dans une direction sensiblement longitudinale et ayant une zone d'entrée et une zone de fond moins haute que la zone d'entrée, chaque tenon (30) comportant une partie élastiquement compressible (33, 36) destinée à pousser verticalement le tenon (30) dans la glissière (20, 23) lorsque le tenon (30) est dans la zone de fond de sa glissière correspondante, un cadre de façade (11) étant prévu autour de l'ouverture (12) d'insertion de boîtier pour coopérer au positionnement et/ou à la fixation d'une plaque (6) de façade du boîtier (1), **caractérisé en ce que** les glissières latérales (20, 23) comprennent deux parties longitudinalement séparées, à savoir une première partie (20) solidaire dudit cadre de façade (11) et une seconde partie (23) non solidaire du cadre de façade (11) et maintenue sur une paroi du compartiment (10) de planche de bord de manière à être sensiblement dans le prolongement longitudinal de la première partie (20).

2. Dispositif selon la revendication 1, **caractérisé en ce que** la première partie (20) de glissière comporte un fond (21) et deux bordures convergentes (22).

3. Dispositif selon la revendication 1 ou 2, **caractérisé en ce que** la seconde partie (23) de glissière comporte une lumière formée par un rail supérieur (24) et un rail inférieur (25) convergents par paliers.

4. Dispositif selon l'une quelconque des revendications 1 à 3, **caractérisé en ce que** la seconde partie (23) de glissière comporte une première section (26) à convergence rapide de raccordement à l'extrémité arrière de la première parte (20) de glissière.

5. Dispositif selon l'une quelconque des revendications 1 à 4, **caractérisé en ce que** la seconde partie (23) de glissière comporte la zone de fond (28) de hauteur inférieure à la hauteur libre d'un tenon.

6. Dispositif selon la revendication 5, **caractérisé en ce que** la seconde partie (23) de glissière comporte comprend au voisinage de la zone de fond (28) une paroi latérale.

7. Dispositif selon lune quelconque des revendications 1 à 6, **caractérisé en ce que** le tenon (30) est constitué d'une partie centrale (31) de laquelle partent deux bras symétriques opposés (32) portant chacun deux pattes (33) formant des ancres longitudinales symétriques par rapport à la partie centrale (31) et élastiquement compressibles en hauteur.

8. Dispositif selon lune quelconque des revendications 1 à 6, **caractérisé en ce que** le tenon (30) comprend un corps principal (35) de section longitudinale ovale surmonté de deux ailettes élastiques (36) partant des extrémités du corps (35) et dirigées le long de celui-ci, parallèlement à lui, vers son centre.

9. Dispositif selon lune quelconque des revendications 1 à 8, **caractérisé en ce que** la plaque de montage (6) du boîtier (1) comporte des reliefs (7) coopérant avec des reliefs (13) complémentaires prévus dans la façade (11) de montage entourant l'ouverture d'insertion (12).

10. Dispositif selon lune quelconque des revendications 1 à 9, **caractérisé en ce que** la plaque de montage (6) du boîtier (1) comporte des orifices de fixation (9) coopérant avec des orifices de fixation (14) prévus dans la façade (11) de montage entourant l'ouverture d'insertion (12).

## Patentansprüche

1. Vorrichtung zur Montage eines Gehäuses (1) in einem Fach (10) eines Armaturenbretts eines Kraftfahrzeugs, welches eine Öffnung (12) zum Einsetzen des Gehäuses aufweist, wobei das Gehäuse (1) zwei seitliche, parallele Flächen (3) aufweist, an denen jeweils ein Zapfen (30) angeordnet ist, wobei die Vorrichtung zwei seitliche, parallele, feste Gleitschienen (20, 23) aufweist, welche für die Zapfen (30) eine geführte Bahn in einer im Wesentlichen longitudinalen Richtung bilden und einen Eingangsbereich und einen hinteren Bereich, welcher nicht so hoch ist wie der Eingangsbereich, besitzen, wobei jeder Zapfen (30) einen elastisch komprimierbaren Bereich (33, 36) aufweist, welcher dafür vorgesehen ist, den Zapfen (30) senkrecht in der Gleitschiene (20, 23) zu drücken, wenn sich der Zapfen (30) im hinteren Bereich dieser entsprechenden Gleitschiene befindet, wobei ein stirnseitiger Rahmen (11) um die Öffnung (12) herum zum Einsetzen des Gehäuses vorgesehen ist, um bei der Positionierung und/oder Befestigung einer stirnseitigen Platte (6) des Gehäuses (1) mitzuwirken, **dadurch gekennzeichnet, dass** die seitlichen Gleitschienen (20, 23) zwei longitudinal getrennte Abschnitte aufweisen, und zwar einen ersten, fest mit dem stirnseitigen Rahmen (11) verbundenen Abschnitt (20) und einen zweiten, nicht fest mit dem stirnseitigen Rahmen (11) verbundenen Abschnitt (23), welcher an einer Wand des Fachs (10) des Armaturenbretts derartig gehalten wird, um im Wesentlichen in der longitudinalen Verlängerung des ersten Abschnitts (20) zu liegen.

2. Vorrichtung nach Anspruch 1, **dadurch gekennzeichnet, dass** der erste Gleitschienen-Abschnitt (20) einen Boden (21) und zwei konvergierende Ränder (22) aufweist.

3. Vorrichtung nach Anspruch 1 oder 2, **dadurch gekennzeichnet, dass** der zweite Gleitschienen-Abschnitt (23) ein Langloch aufweist, welches durch eine obere Schiene (24) und eine untere Schiene (25) gebildet wird, die schrittweise konvergierend sind.

4. Vorrichtung nach einem der Ansprüche 1 bis 3, **dadurch gekennzeichnet, dass** der zweite Gleitschienen-Abschnitt (23) einen ersten Abschnitt (26) mit starker Konvergenz zur Anbindung an das hintere Ende des ersten Gleitschienen-Abschnitts (20) aufweist.

5. Vorrichtung nach einem der Ansprüche 1 bis 4, **dadurch gekennzeichnet, dass** der zweite Gleitschienen-Abschnitt (23) den hinteren Bereich (28) mit geringerer Höhe als die freie Höhe eines Zapfens umfasst.

6. Vorrichtung nach Anspruch 5, **dadurch gekennzeichnet, dass** der zweite Gleitschienen-Abschnitt (23) in der Nähe des hinteren Bereichs (28) eine Seitenwand aufweist umfasst.

7. Vorrichtung nach einem der Ansprüche 1 bis 6, **dadurch gekennzeichnet, dass** der Zapfen (30) aus einem zentralen Abschnitt (31) gebildet wird, von dem zwei symmetrische, sich gegenüber liegende Arme (32) ausgehen, welche jeweils zwei Laschen (33) tragen, die longitudinale, in Bezug auf den zentralen Abschnitt (31) symmetrische und elastisch in der Höhe komprimierbare Anker bilden.

8. Vorrichtung nach einem der Ansprüche 1 bis 6, **dadurch gekennzeichnet, dass** der Zapfen (30) einen Hauptkörper (35) mit ovalem Längsschnitt aufweist, welcher von zwei elastischen Flügeln (36) überdeckt wird, die von den Enden des Körpers (35) ausgehen und entlang diesem, parallel zu ihm, ausgerichtet sind.

9. Vorrichtung nach einem der Ansprüche 1 bis 8, **dadurch gekennzeichnet, dass** die Montageplatte (6) des Gehäuses (1) Erhebungen (7) aufweist, welche mit komplementären Erhebungen (13) zusammenwirken, die in der Frontseite zur Montage (11) vorgesehen sind, welche die Öffnung zum Einsetzen (12) umgibt.

10. Vorrichtung nach einem der Ansprüche 1 bis 9, **dadurch gekennzeichnet, dass** die Montageplatte (6) des Gehäuses (1) Befestigungsbohrungen (9) aufweist, welche mit Befestigungsbohrungen (14) zusammenwirken, die in der Frontseite zur Montage (11) vorgesehen sind, welche die Öffnung zum Einsetzen (12) umgibt.

## Claims

1. Device for mounting a unit (1) in a compartment (10) of a vehicle instrument panel having a unit insertion opening (12), the unit (1) having two parallel lateral faces (3) on each of which there is disposed a stud (30), the device having two fixed parallel lateral slideways (20, 23) that form a guided path for the studs (30) in a substantially longitudinal direction and have an entry zone and an end zone that is less high than the entry zone, each stud (30) having an elastically compressible part (33, 36) that is intended to vertically push the stud (30) in the slideway (20, 23) when the stud (30) is in the end zone of its corresponding slideway, a facade surround (11) being provided around the unit insertion opening (12) so as to cooperate in the positioning and/or in the fixing of a facade plate (6) of the unit (1), **characterized in that** the lateral slideways (20, 23) comprise two longitudinally separated parts, specifically a first part (20) secured to said facade surround (11) and a second part (23) not secured to the facade surround (11) and held on a wall of the instrument panel compartment (10) so as to be substantially in the longitudinal continuation of the first part (20).

2. Device according to Claim 1, **characterized in that** the first slideway part (20) has a back wall (21) and two convergent lips (22).

3. Device according to Claim 1 or 2, **characterized in that** the second slideway part (23) has a slot formed by an incrementally convergent upper rail (24) and lower rail (25).

4. Device according to any one of Claims 1 to 3, **characterized in that** the second slideway part (23) has a first, rapidly convergent section (26) for connecting to the rear end of the first slideway part (20).

5. Device according to any one of Claims 1 to 4, **characterized in that** the second slideway part (23) has the end zone (28) having a height less than the free height of a stud.

6. Device according to Claim 5, **characterized in that** the second slideway part (23) has comprises a lateral wall in the vicinity of the end zone (28).

7. Device according to any one of Claims 1 to 6, **characterized in that** the stud (30) consists of a central part (31) from which there extend two opposite symmetrical arms (32) that each bear two lugs (33) forming longitudinal anchors that are symmetrical with respect to the central part (31) and are elastically compressible vertically.

8. Device according to any one of Claims 1 to 6, **characterized in that** the stud (30) comprises a main body (35) having an oval longitudinal section surmounted by two elastic fins (36) that extend from the ends of the body (35) and are directed along the latter, parallel thereto, toward its center.

9. Device according to any one of Claims 1 to 8, **characterized in that** the mounting plate (6) of the unit (1) has reliefs (7) that engage with complementary reliefs (13) provided in the mounting facade (11) surrounding the insertion opening (12).

10. Device according to any one of Claims 1 to 9, **characterized in that** the mounting plate (6) of the unit (1) has fixing orifices (9) that engage with fixing orifices (14) provided in the mounting facade (11) surrounding the insertion opening (12).
